(19) Europäisches Patentamt
European Patent Office
Office européen des brevets

(11) **EP 0 599 721 B1**

(12) **FASCICULE DE BREVET EUROPEEN**

(45) Date de publication et mention
de la délivrance du brevet:
**21.01.1998 Bulletin 1998/04**

(51) Int. Cl.[6]: **B01D 53/34**

(21) Numéro de dépôt: **93402832.5**

(22) Date de dépôt: **22.11.1993**

(54) **Procédé de réduction des émissions de polluants dans les installations de combustion à lit fluidisé circulant**

Verfahren zur Reduzierung von Schadstoffemissionen bei Verbrennungsvorrichtungen mit zirkulierendem Wirbelbett

Process for reducing the emission of pollutants in combustion devices with circulating fluidised bed

(84) Etats contractants désignés:
**AT DE DK ES FR GB SE**

(30) Priorité: **24.11.1992 FR 9214086**

(43) Date de publication de la demande:
**01.06.1994 Bulletin 1994/22**

(73) Titulaire: **STEIN INDUSTRIE**
**F-78140 Vélizy-Villacoublay (FR)**

(72) Inventeurs:
• **Vandycke, Michel**
**F-78950 Gambais (FR)**

• **Morin, Jean-Xavier**
**F-45170 Neuville Aux Bois (FR)**

(74) Mandataire: **Dalsace, Michel et al**
**c/o ALCATEL ALSTHOM,**
**Département de Propriété Industrielle,**
**30, avenue Kléber**
**75116 Paris (FR)**

(56) Documents cités:
**EP-A- 0 301 272**       **WO-A-88/04196**
**WO-A-90/09226**       **GB-A- 2 174 082**
**US-A- 4 312 280**       **US-A- 4 600 568**
**US-A- 4 861 568**

## Description

La présente invention se rapporte à un procédé de réduction des émissions de polluants dans les installations de combustion à lit fluidisé circulant.

Il concerne plus précisément un procédé de réduction des émissions d'oxydes de soufre dans une installation de combustion à lit fluidisé circulant, comportant un foyer dans lequel un agent désulfurant est introduit et dont les solides en circulation sont récupérés par un cyclone, les gaz partiellement dépoussiérés sortant de ce cyclone passant dans une chaudière de récupération, puis dans un dépoussiéreur où les cendres sont captées.

Il est bien connu que la combustion en lit fluidisé circulant s'effectue dans des conditions relativement favorables à la réduction des émissions d'oxydes d'azote (monoxyde d'azote et dioxyde d'azote) et des émissions d'oxydes de soufre (dioxyde de soufre et trioxyde de soufre). La température de combustion qui est de l'ordre de 850°C et l'étagement de l'alimentation en air entraînent une faible production d'oxydes d'azote qui est en général inférieur à 200 mg/Nm$^3$ rapporté à des fumées sèches contenant 6% d'oxygène résiduel.

La captation des oxydes de soufre se fait actuellement grâce à un agent désulfurant solide tel que le calcaire introduit dans le foyer de combustion. Cette captation peut atteindre environ 95% grâce au brassage très important des solides dû aux recirculations internes et externes et à la température de combustion d'environ 850°C.

Cependant toute augmentation des performances de désulfuration en augmentant le débit d'agent désulfurant entraînerait une augmentation sensible des émissions d'oxydes d'azote à cause de l'effet catalytique de l'agent désulfurant sur la conversion de l'azote en oxydes d'azote. Le procédé connu s'avère donc insuffisamment efficace en cas de volonté d'amélioration de ses performances, par exemple en cas de durcissement des réglementations.

Par ailleurs, à cause de la faible température de combustion, le lit fluidisé circulant génère des émissions de protoxyde d'azote. Si l'on augmente cette température pour réduire les émissions de protoxyde d'azote, on obtient en contre partie une baisse d'efficacité de désulfuration néfaste.

Enfin, si l'on introduit un excès d'agent désulfurant dans le foyer, pour obtenir un rendement élevé de désulfuration, le lit fluidisé circulant produit des quantités importantes de résidus solides.

L'invention résout ces problèmes en proposant un procédé de réduction des émissions d'oxydes de soufre qui permet une augmentation du rendement de désulfuration tout en réduisant la quantité nécessaire d'agent désulfurant et donc de résidus solides en résultant et sans augmenter les émissions d'oxydes d'azote par effet catalytique, tout en permettant de faire fonctionner le lit fluidisé à une température plus élevée afin de réduire les émissions de protoxyde d'azote.

Le brevet japonais n°60-71025 déposé le 23 septembre 1983 décrit un procédé de désulfuration des fumées d'un foyer de lit fluidisé dense comprenant une étape d'aspersion des fumées avec de l'eau pour humidifier les gaz, le dioxyde de soufre des gaz réagissant avec un agent de désulfuration contenu dans les gaz et ensuite la récupération de l'agent et des produits de désulfuration en introduisant les gaz dans un dépoussiéreur.

L'invention perfectionne ce procédé en l'adaptant à un lit fluidisé circulant et de plus intègre l'oxydation des sulfites contenus dans les produits de désulfuration.

Pour ce faire,

- en aval de ladite chaudière de récupération et en amont du dépoussiéreur, les fumées sont désulfurées par voie semi-humide dans une enceinte de réaction équipée d'une injection d'eau, et
- en aval dudit dépoussiéreur, les produits de désulfuration obtenus sont oxydés thermiquement, lesdits produits de désulfuration étant oxydés par mélange à des solides en circulation extraits du foyer du lit fluidisé dans un réacteur, le réacteur étant un refroidisseur de cendres installé, de façon connue en soi, en partie basse du foyer.

Si besoin est, une injection complémentaire d'agent désulfurant est réalisée dans ladite enceinte de réaction ou en amont de ladite enceinte de réaction et ledit agent désulfurant complémentaire est, de préférence, de la chaux.

Cette chaux peut être sous forme pulvérulente ou du lait de chaux dont on peut éventuellement contrôler la température.

L'invention concerne également un procédé de réduction des émissions de protoxyde d'azote consistant à augmenter la température dans le foyer et à appliquer le procédé tel que décrit précédemment, et une installation pour la mise en oeuvre du procédé.

L'invention concerne enfin une installation de lit fluidisé circulant pour la mise en oeuvre du procédé précisé ci-dessus.

L'invention est exposée ci-après plus en détail à l'aide d'un dessin ne représentant qu'un mode de réalisation préféré de l'invention.

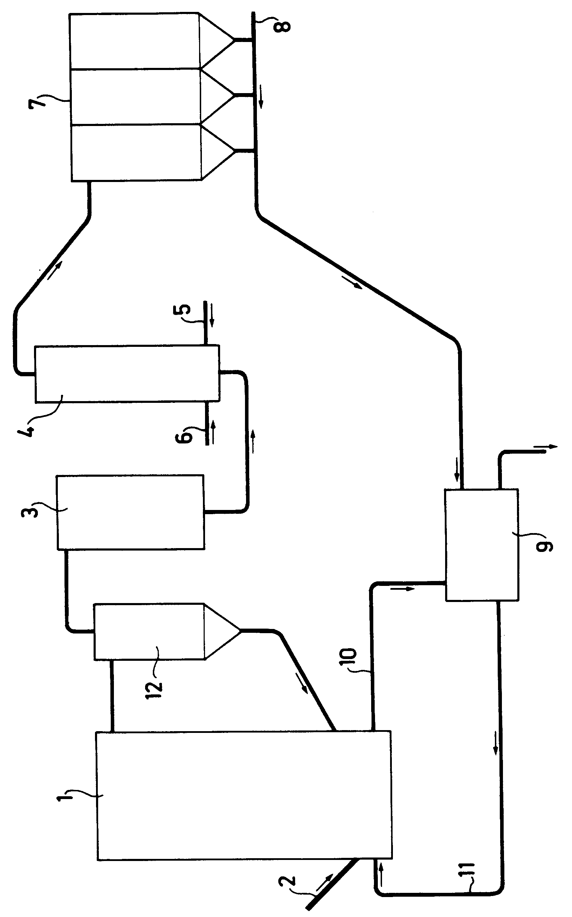

La figure unique est une vue schématique d'une installation pour la mise en oeuvre du procédé conforme à l'invention.

Un foyer 1 de lit fluidisé circulant alimenté en combustible est relié à sa partie haute à un cyclone 12. A la base du cyclone 12 les solides sont réinjectés dans le foyer 1. Les gaz partiellement dépoussiérés sortant du cyclone 12 passent dans une chaudière de récupération 3. Pour traiter les émissions d'oxydes de soufre, un agent désulfurant, de préférence du calcaire, est injecté en 2 dans le foyer 1.

Ce procédé de désulfuration connu constitue la première étape du procédé conforme à l'invention.

Le procédé selon l'invention comporte les étapes supplémentaires suivantes:

- en aval de ladite chaudière de récupération 3, les fumées sont désulfurées par voie semi-humide dans une enceinte de réaction 4 équipée d'un injection d'eau 5 et éventuellement d'une injection complémentaire d'agent désulfurant 6, par exemple de la chaux,
- en aval de ladite enceinte de réaction 4, les produits de désulfuration sont recueillis à la base d'un dépoussiéreur 7, de préférence du type à manches ou électrostatique,
- en aval dudit dépoussiéreur 7, les produits de désulfuration sont oxydés thermiquement.

Plus précisément, lesdits produits de désulfuration sont oxydés par mélange à des solides en circulation extraits en 10 du foyer 1 dans un réacteur 9, de préférence le refroidisseur de cendres installé, de façon connue, en partie basse du foyer 1.

Les fumées qui pénètrent dans l'enceinte 4 sont chargées en cendres volantes et notamment en chaux excédentaire qui n'a pas réagi dans le foyer 1. L'injection d'eau 5 dans l'enceinte 4 permet d'abaisser la température des fumées au voisinage de la température de saturation et produit une réactivation de la chaux permettant un complément de désulfuration significatif selon les réactions simplifiées suivantes:

$$CaO + H_2O \rightarrow Ca(OH)_2$$

$$Ca(OH)_2 + SO_2 \rightarrow CaSO_3 + H_2O$$

$$Ca(OH)_2 + SO_2 + 1/2\ O_2 \rightarrow CaSO_4 + H_2O$$

Les émissions de composés halogénés tels que HCl et HF sont également très sensiblement réduites selon les réactions simplifiées suivantes:

$$Ca(OH)_2 + HCl \rightarrow CaCl_2 + HO_2$$

$$Ca(OH)_2 + HF \rightarrow CaF_2 + H_2O$$

Lorsque les fumées pénétrant dans l'enceinte 4 ne contiennent pas une quantité suffisante de chaux, il est possible d'injecter en 6 dans l'enceinte 4 ou en amont de celle-ci un complément de chaux vive ou éteinte CaO ou Ca(OH)$_2$. Cette chaux peut être sous forme pulvérulente ou sous forme de suspension aqueuse qui peut être injectée après avoir été portée à une température contrôlée, afin d'améliorer les mécanismes physico-chimiques.

L'oxydation thermique des résidus recueillis en 8 permet de transformer le sulfite de calcium en sulfate de calcium afin de valoriser ou de mettre en décharge plus facilement les résidus. Pour être efficace cette oxydation doit se dérouler en milieu oxydant à une température de préférence supérieure à 400°C. Avantageusement, la chaleur nécessaire est apportée par une extraction 10 des solides du foyer 1.

Les résidus recueillis en 8 qui sont à une température de 50 à 80°C sont donc mélangés dans le réacteur 9 avec des solides à environ 850°C prélevés dans le foyer en 10. le débit de solides prélevés en 10 est ajusté de manière à obtenir la température nécessaire à l'oxydation. De façon à maintenir un fonctionnement correct du lit fluidisé, un retour de solides 11 est installé à partir du réacteur 9 vers le foyer 1.

Ce réacteur 9 peut être conçu selon différents arrangements dépendant du degré de tri granulométrique entre les différents solides qui sont introduits. Le réacteur 9 est de préférence le refroidisseur de cendres habituellement installé en partie basse du foyer 1, pour extraire des cendres du foyer de façon à maintenir constant l'inventaire des solides dans le foyer 1.

Ce procédé permet de réduire la quantité d'agent désulfurant et donc de résidus solides en utilisant de façon optimale l'agent désulfurant, ce qui peut être approprié dans le cas de mesures réglementaires sévères.

Il permet d'accroître bien au-delà de 95% le rendement global de désulfuration, sans augmenter trop fortement le débit d'agent désulfurant dans le lit fluidisé et donc sans risque d'augmenter les émissions d'oxydes d'azote par effet catalytique, ce qui peut être approprié dans le cas de réglementations très sévères.

Si l'on souhaite réduire les émissions de protoxyde d'azote, le procédé permet de faire fonctionner le lit fluidisé à une température plus élevée qu'usuellement. La baisse d'efficacité de désulfuration qui en résulte dans le foyer à lit fluidisé 1 est alors compensée par la désulfuration qui se produit dans l'enceinte 4 à injection d'eau.

**Revendications**

1. Procédé de réduction des émissions d'oxydes de soufre dans une installation de combustion à lit fluidisé circulant, comportant un foyer (1) dont les poussières sont récupérées au moins partiellement par un cyclône (12), les gaz partiellement dépoussiérés sortant de ce cyclône (12) passant dans une chaudière de récupération (3), puis dans un dépoussiéreur (7), et selon lequel un agent désulfurant est introduit dans le foyer (1), procédé caractérisé en ce que

- en aval de ladite chaudière de récupération (3) et en amont du dépoussiéreur (7), les fumées sont désulfurées par voie semi-humide dans une enceinte de réaction (4) équipée d'une injection d'eau (5), et
- en aval dudit dépoussiéreur (7), les produits de désulfuration obtenus sont oxydés thermiquement, lesdits produits de désulfuration étant oxydés par mélange à des solides en circulation extraits du foyer (1) du lit fluidisé dans un réacteur (9), le réacteur (9) étant un refroidisseur de cendres installé en partie basse du foyer (1).

2. Procédé selon la revendication 1, caractérisé en ce qu'une injection complémentaire d'agent désulfurant est réalisée dans ladite enceinte de réaction (4).

3. Procédé selon la revendication 1, caractérisé en ce qu'une injection complémentaire d'agent désulfurant est réalisée en amont de ladite enceinte de réaction (4).

4. Procédé selon la revendication 2 ou 3, caractérisé en ce que ledit agent désulfurant complémentaire est de la chaux injectée sous forme pulvérulente.

5. Procédé selon la revendication 2 ou 3, caractérisé en ce que ledit agent désulfurant complémentaire est un lait de chaux.

6. Procédé selon la revendication 5, caractérisé en ce que ledit lait de chaux est injecté après avoir été chauffé à une température contrôlée.

7. Procédé de réduction des émissions de protoxyde d'azote consistant à augmenter la température dans le foyer (1) par rapport à la température normale de fonctionnement et à appliquer le procédé selon l'une des revendications 1 à 6.

8. Installation de combustion à lit fluidisé circulant pour la mise en oeuvre du procédé selon la revendication 1, comportant un foyer (1) dont les poussières sont récupérées au moins partiellement par un cyclone (12), une chaudière de récupération (3) dans laquelle passent les gaz partiellement dépoussiérés sortant de ce cyclone (12), un dépoussiéreur (7), installation caractérisée en que qu'elle comprend en aval de ladite chaudière de récupération (3) et en amont du dépoussiéreur (7) une enceinte de réaction (4) équipée d'une injection d'eau (5) et en aval dudit dépoussiéreur (7) un dispositif d'oxydation thermique (9) des produits de désulfuration obtenus, ledit dispositif d'oxydation thermique (9) étant un refroidisseur de cendres installé en partie basse du foyer (1), où lesdits produits de désulfuration sont mélangés à des solides en circulation extraits du foyer (1).

**Claims**

1. A method of reducing sulphur oxide emissions from a circulating fluidised bed combustion installation including a furnace (1) from which the dust is recovered at least in part by a cyclone (12), the partially dedusted gases leaving the cyclone (12) passing through a recovery boiler (3), and then into a dust filter (7), in which method a desulphurizing agent is inserted into the furnace (1), characterised in that:

- downstream from said recovery boiler (3), and upstream from the dust filter (7), the flue gases are desulphurised in semi-humid manner in a reaction enclosure (4) provided with a water injection inlet (5); and
- downstream from said dust filter (7), the resulting desulphurisation products are thermally oxidised, said desulphurisation products being oxidised by being mixed in a reactor (9) with circulating solids that are extracted from the furnace (1) of the fluidised bed, the reactor (9) being an ash cooler installed at the bottom of the furnace (1).

2. A method according to claim 1, characterised in that additional desulphurising agent is injected into said reaction enclosure (4).

3. A method according to claim 1, characterised in that additional desulphurising agent is injected upstream from said reaction enclosure (4).

4. A method according to claim 2 or claim 3, characterised in that said additional desulphurising agent is lime injected in powder form.

5. A method according to claim 2 or claim 3, characterised in that said additional desulphurising agent is a lime slurry.

6. A method according to claim 5, characterised in that said lime slurry is injected after is has been heated to a controlled temperature.

7. A method of reducing nitrous oxide emissions, the method consisting in increasing the temperature in the furnace (1), relative to the conventional working temperature, and in performing the method according to any one of claims 1 to 6.

8. A circulating fluidised bed combustion installation for performing the method according to claim 1, the installation including a furnace (1) from which the dust is recovered at least in part by a cyclone (12), a recovery boiler (3) through which the partially dedusted gases leaving the cyclone (12) pass, and a dust filter (7), characterised in that, downstream from said recovery boiler (3) and upstream from the dust filter (7), the installation includes a reaction enclosure (4) provided with a water injection inlet (5), and, downstream from said dust filter (7), said installation includes a thermal oxidation device (9) for thermally oxidising the desulphurisation products obtained, said thermal oxidation device (9) being an ash cooler installed at the bottom of the furnace (1) in which said desulphurisation products are mixed with circulating solids extracted from the furnace (1).

**Patentansprüche**

1. Verfahren zur Reduzierung der Emission von Schwefeloxiden in einer Verbrennungsanlage mit zirkulierender Wirbelschicht, die einen Brennraum (1) aufweist, dessen Staubteilchen zumindest teilweise von einem Zyklon (12) abgefangen werden, wobei die aus diesem Zyklon (12) austretenden teilweise entstaubten Gase durch einen Wärmerückgewinnungskessel (3) und dann einen Staubabscheider (7) strömen, und gemäß dem ein Entschwefelungsmittel in den Brennraum (1) eingeführt wird, dadurch gekennzeichnet, daß

   - hinter dem Wärmerückgewinnungskessel (3) und vor dem Staubabscheider (7) der Rauch in einem mit einer Wasserzufuhr (5) versehenen Reaktionsraum (4) auf halb-feuchte Weise entschwefelt wird, und
   - hinter dem Staubabscheider (7) die erhaltenen Entschwefelungsprodukte thermisch oxidiert werden, wobei die Entschwefelungsprodukte durch Mischung mit in einem Reaktor (9) aus dem Brennraum (1) der Wirbelschicht entzogenen Feststoffen oxidiert werden und der Reaktor (9) ein Aschenkühler ist, der im unteren Teil des Brennraums (1) angeordnet ist.

2. Verfahren nach Anspruch 1, dadurch gekennzeichnet, daß eine komplementäre Einspeisung eines Entschwefelungsmittels in den Reaktionsraum (4) vorgesehen ist.

3. Verfahren nach Anspruch 1, dadurch gekennzeichnet, daß eine komplementäre Einspeisung eines Entschwefelungsmittels vor dem Reaktionsraum (4) vorgesehen ist.

4. Verfahren nach Anspruch 2 oder 3, dadurch gekennzeichnet, daß das komplementäre Entschwefelungsmittel pulverförmig eingeführter Kalk ist.

5. Verfahren nach Anspruch 2 oder 3, dadurch gekennzeichnet, daß das komplementäre Entschwefelungsmittel Kalkmilch ist.

6. Verfahren nach Anspruch 5, dadurch gekennzeichnet, daß die Kalkmilch eingespeist wird, nachdem sie auf eine kontrollierte Temperatur gebracht wurde.

7. Verfahren zur Reduzierung der Emissionen von StickstoffMonoxid, das darin besteht, die Temperatur im Brennraum (1) im Vergleich zur normalen Betriebstemperatur zu erhöhen und das Verfahren gemäß einem der Ansprüche 1 bis 6 anzuwenden.

8. Verbrennungsanlage mit zirkulierender Wirbelschicht für die Anwendung des Verfahrens gemäß Anspruch 1, die einen Brennraum (1), dessen Staubteilchen zumindest teilweise von einem Zyklon (12) abgefangen werden, einen Wärmerückgewinnungskessel (3), durch den die aus diesem Zyklon (12) austretenden, teilweise entstaubten Gase strömen, und einen Staubabscheider (7) aufweist, dadurch gekennzeichnet, daß sie hinter dem Wärmerückgewinnungskessel (3) und vor dem Staubabscheider (7) einen Reaktionsraum (4), der mit einer Wasserzufuhr (5) versehen ist, und hinter dem Staubabscheider (7) eine Vorrichtung zur thermischen Oxidation (9) der erhaltenen Entschwefelungsprodukte aufweist, wobei die Vorrichtung (9) zur thermischen Oxidation ein Aschenkühler ist, der im unteren Bereich des Brennraums (1) angeordnet ist, wo die Entschwefelungsprodukte mit zirkulierenden Feststoffteilchen vermischt werden, die aus dem Brennraum (1) entnommen wurden.